# EUROPÄISCHE PATENTSCHRIFT

(11) **EP 1 849 556 B1**
(45) Veröffentlichungstag und Bekanntmachung des Hinweises auf die Patenterteilung: **17.12.2008**
(21) Anmeldenummer: 06008711.1
(22) Anmeldetag: 27.04.2006
(51) Int. Cl.: B23Q 17/24

(54) **Spannvorrichtung mit Einrichtung zur Messung der Distanz zwischen einem Spannfutter und einem Werkzeug- oder Werkstückhalter**
Clamping apparatus with device for measuring the distance between a chuck and a worktool or workpiece holder
Appareil de serrage avec dispositif de mesure de la distance entre un mandrin et un support de pièce ou d'outil

(43) Veröffentlichungstag der Anmeldung: 31.10.2007
(73) Patentinhaber: System 3R International AB, 162 26 Vällingby (SE)
(72) Erfinder: Dahlquist, Hakan, 165 72 Hässelby (SE)
(74) Vertreter: Weiss, Wolfgang

(56) Entgegenhaltungen:
- DE-A1- 3 625 608
- US-A- 4 770 575
- US-A- 4 855 558
- US-A- 5 781 295

## Beschreibung

Die Erfindung bezieht sich auf eine Spannvorrichtung für ein Werkzeug oder ein Werkstück, umfassend ein Spannfutter und einen zum Spannfutter passenden Werkzeug- oder Werkstückhalter, wobei das Spannfutter Pfosten mit Anlageflächen zur Ausrichtung des Werkzeuges oder Werkstückes in einer X- und Y-Richtung und mit Stirnflächen zur Festlegung einer Ebene senkrecht zur Z-Richtung aufweist.

Im Werkzeugmaschinenbau werden Spannvorrichtungen verwendet, um Werkzeuge und/oder Werkstücke an einer genau definierten Position in einem X-Y-Z-Koordinatensystem festzuhalten. Das Werkzeug ist beispielsweise eine Elektrode, die in einer Senkerodieranlage verwendet wird um ein Werkstück mittels Funkenerosion zu bearbeiten. Das Werkzeug, hier beispielsweise die Elektrode, wird in einem Werkzeughalter eingesetzt, der von einem dazu passenden Spannfutter aufgenommen wird. In der Herstellung von Formen für Spritzgussprodukte mit hohen Anforderungen an die Massgenauigkeit werden an die Genauigkeit der Spritzgussformen mindestens ebenso hohe Anforderungen gestellt. Auch die Reproduzierbarkeit des Einspannvorganges der unterschiedlichen Werkzeuge, die im Verlauf der Bearbeitung verwendet werden, und der Werkstücke hat einen Einfluss auf die Massgenauigkeit und auf das Aussehen des Produktes. Die handelsüblichen Spannvorrichtungen erreichen eine Genauigkeit der Positionierung von +/- 2 µm.

Aus der EP 255 042 B1 ist eine gattungsgemässe Spannvorrichtung bekannt. Die Spannvorrichtung weist rechtwinklig zueinander angeordnet zwei Nutenpaare und zwei Leistenpaare mit elastischen Lippen auf. Die Spannvorrichtung wird beispielsweise verwendet zur Einspannung der Elektrode in einer Senkerosionsanlage.

Aus der DE 195 28 676 C2 ist eine Vorrichtung zur absoluten Distanzmessung bekannt. Die Vorrichtung umfasst einen optischen Interferometer mit Lichtleitfasern, mit zwei Lasern als Lichtquellen, wobei mindestens ein Laser in der Wellenlänge abstimmbar ist, mit Strahlenteiler, fotoelektrischen Empfängern und mit einen Rechner zur Auswertung der Signalen und zur Berechnung der Distanz mit einer Präzision im Nanometerbereich.

Ausgehend von diesem Stand der Technik ist es Aufgabe der Erfindung, eine Spannvorrichtung anzugeben, die ein genaues und reproduzierbares Einspannen im Nanometerbereich möglich macht und die möglichst wenig Platz in der Bearbeitungsmaschine beansprucht.

Diese Aufgabe wird gelöst durch eine Spannvorrichtung für ein Werkzeug oder ein Werkstück, umfassend ein Spannfutter und einen zum Spannfutter passenden Werkzeug- oder Werkstückhalter, wobei das Spannfutter Pfosten mit Anlageflächen zur Ausrichtung des Werkzeuges oder Werkstückes in einer X- und Y-Richtung und mit Stirnflächen zur Festlegung einer Ebene senkrecht zur Z-Richtung aufweist, wobei in den Anlageflächen und in den Stirnflächen Einrichtungen zur Messung der Distanz zwischen dem Spannfutter und dem Werkzeug- oder dem Werkstückhalter ausgebildet sind.

Bevorzugte Weiterbildungen der Erfindung ergeben sich aus den abhängigen Ansprüchen.

Es ist von Vorteil, dass die Spannvorrichtung bei einer Genauigkeit im Nanometerbereich möglichst wenig Platz in der Bearbeitungsmaschine beansprucht. Dies wird dadurch erreicht, dass die Einrichtungen zur Messung der Distanz als optische Interferometer ausgebildet sind.

Es ist auch von Vorteil, dass mit der Spannvorrichtung neben der absoluten Distanzmessung auch Kräfte, wie beispielsweise Torsionskräfte oder Vibrationen, gemessen werden können. Dies wird dadurch erreicht, dass die optischen Interferometer mit einem elektronischen Auswertesystem gekoppelt sind.

Es ist weiter auch von Vorteil, dass mit der Spannvorrichtung die Dimensionsänderung als Folge der Temperaturänderung gemessen werden kann. Dies wird dadurch erreicht, dass die optischen Interferometer auf gegenüberliegenden Anlageflächen und/oder Stirnflächen der Spannfutter und/oder Werkzeughalter angeordnet sind. Eine Messeinrichtung auf zwei gegenüberliegenden Seiten einer Nut oder einer Leiste der Spannvorrichtung erhöht die Zuverlässigkeit der Messung und ermöglicht die Korrektur der Temperaturausdehnung.

Der Kerngedanken der Erfindung ist es, eine berührungslose Messung integriert in der Spannvorrichtung einer Senkerosionsanlage zu haben. Wenn die Messeinrichtung in der Spannvorrichtung integriert wird, entfallen externe Messungen am eingespannten Werkzeug oder Werkstück. Mit den vom elektronischen Auswertesystem erhaltenen Messwerten kann die Spannvorrichtung in ihrer Position korrigiert werden. Hierdurch wird die Zeit für das Ein- und Ausspannen gespart und die Genauigkeit der Positionierung wird erheblich verbessert.

Ein Ausführungsbeispiel der Erfindung wird anhand der Figuren beschrieben. Es zeigen:
Figur 1 einen Schnitt durch eine erfindungsgemässe Spannvorrichtung,
Figur 2 eine Sicht auf die Spannvorrichtung von Figur 1,
Figur 3 einen Bereich der Spannvorrichtung geschnitten entlang der Mittellinie,
Figur 4 einen Bereich der Spannvorrichtung geschnitten entlang der Mittellinie und senkrecht zum Schnitt von Figur 3,
Figur 5 eine perspektivische Sicht auf das Spannfutter gesehen von der Seite des Werkzeug- oder des Werkstückhalters,
Figur 6 eine perspektivische Sicht auf den Werkzeug- oder Werkstückhalter gesehen von der Seite des Spannfutters und
Figur 7 eine perspektivische Sicht auf den Werkzeug- oder Werkstückhalter gesehen von der gegenüberliegenden Seite.

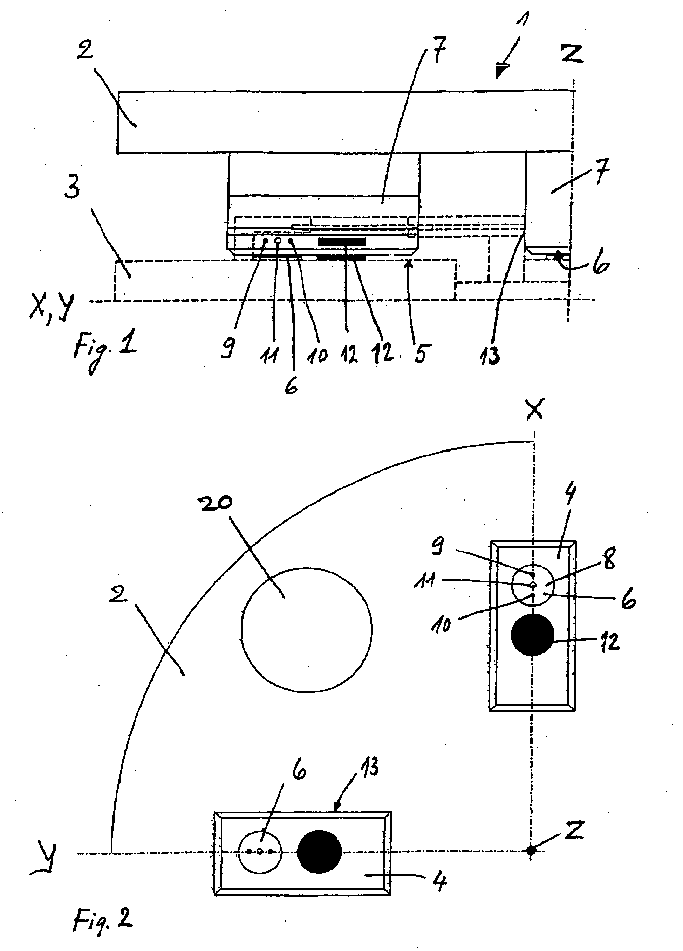

In Figur 1 ist eine Spannvorrichtung 1 für eine Elektroerosionsanlage geschnitten dargestellt. Weil die Spannvorrichtung 1 in der Richtung der X- und Y- Achsen symmetrisch ausgebildet ist, ist in Figur 1 lediglich eine Hälfte der Spannvorrichtung 1 dargestellt. Die Spannvorrichtung 1 besteht aus einem Spannfutter 2 und einem dazu passenden Werkstück- oder Werkzeughalter 3. Das Spannfutter 2 weist sowohl in der Richtung der X-Achse als auch in der Richtung der Y-Achse jeweils zwei Pfosten 7 mit Stirnflächen 6 auf, die unter einem Winkel von 90° angeordnet sind.

In Figur 2 ist das Spannfutter 2 der Spannvorrichtung 1 von Figur 1 nochmals in der Sicht von unten, das heisst vom Werkstück- oder Werkzeughalter 3 aus gesehen, dargestellt. Zwischen den Pfosten 7 sind so genannte Z-Inseln 20 ausgebildet. Auf den Stirnflächen 6 an der Unterseite der Pfosten 7 des Spannfutters 2 sind Messeinrichtungen 4 zur Messung der Distanz zwischen dem Spannfutter 2 und dem Werkzeughalter 3 dargestellt. Die Messeinrichtung 4 ist bündig mit den Stirnflächen 6 der Pfosten 7 angeordnet. Jede Messeinrichtung 4 umfasst ein optisches Interferometer 8 mit zwei Lichtleitfasern 9,10. Eine Lichtleitfaser 10 dient als Referenzlichtleitfaser. Mit der Referenzlichtleitfaser 10 werden unter anderem die Reflektionseigenschaften des Werkstückes gemessen. Zwischen den beiden Lichtleitfasern 9,10 ist eine Bohrung 11 für ein Spülmedium ausgebildet. Das Spülmedium kann gasförmig oder flüssig, beispielsweise Luft oder die Spülflüssigkeit der Elektroerosionsanlage sein.

Benachbart zum optischen Interferometer 8 ist ein piezoaktives Element 12 angeordnet. Mit dem piezoaktiven Element 12 wird die Spannvorrichtung 1 in einem relativ engen Bereich von wenigen Mikron fest eingespannt und gehalten. Die Distanzmessung im Nanometerbereich wird von dem Interferometer 8 erst durchgeführt, wenn die Spannvorrichtung 1 innerhalb des Wirkungsbereiches des piezoaktiven Elementes 12 fest gespannt ist. Die piezoaktiven Elemente 12 sind vorzugsweise als Dünnschichtfolien mit einer niedrigen Steifigkeit gegen Scherkräfte ausgebildet. An jeder Lichtleitfaser 9,10 sind mehrere Laserlichtquellen mit unterschiedlicher oder abstimmbarer Wellenlänge angeschlossen.

Die Lichtleitfasern 9,10 sind mit einem elektronischen Auswertesystem verbunden. Mit dem elektronischen Auswertesystem werden unter anderem die Wellenlänge und die Pulsdauer der verschiedenen Laser gesteuert. Die Flächen 5, die am Werkzeughalter 3 gegenüber der Messeinrichtung 4 des Spannfutters 2 ausgebildet sind, sind bereichsweise als Reflektionsflächen 23,24 für das Licht aus den Lichtleitfasern 9,10 ausgebildet. Mit der hier beschriebenen Einrichtung kann die Spannvorrichtung 1 in der Z-Richtung in einer Genauigkeit von wenigen Nanometer positioniert werden.

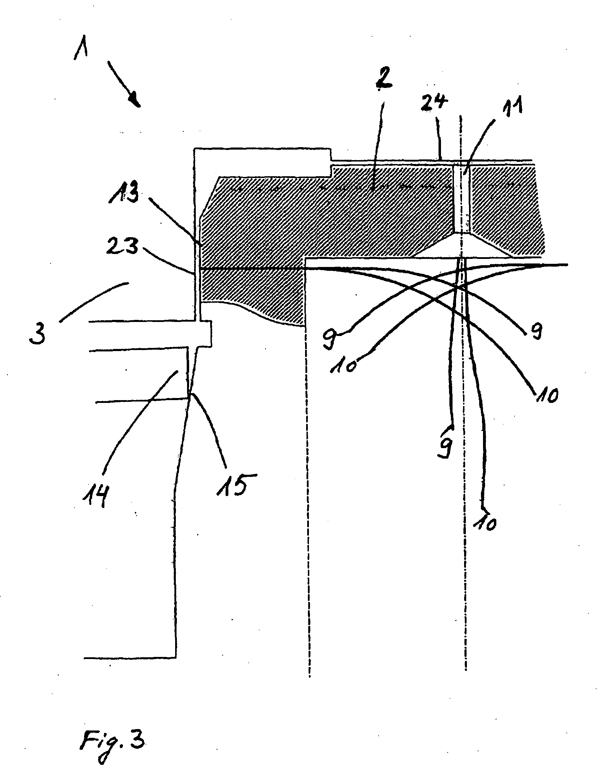

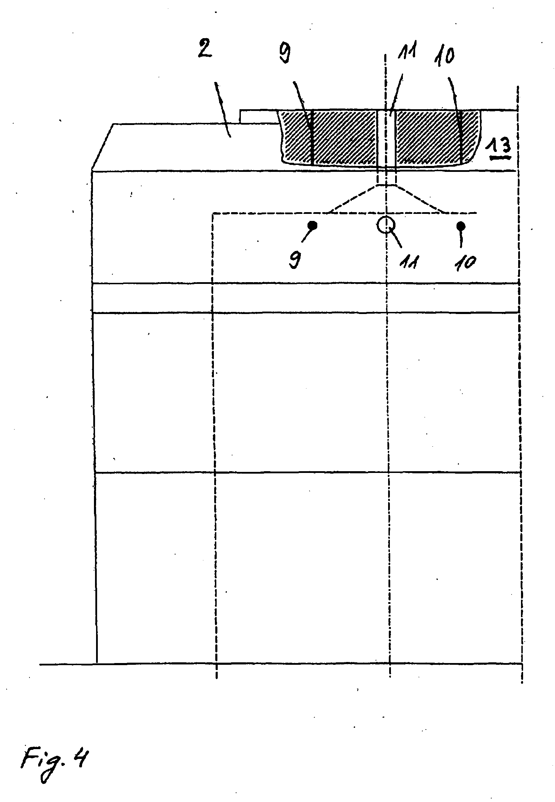

In Figur 3 ist die Spannvorrichtung 1 in radialer Richtung, das heisst durch einen der vier Pfosten 7 geschnitten dargestellt. Figur 2 zeigt die Spannvorrichtung 1 im gespannten Zustand. In den Figuren 3 und 4 sind die Anlageflächen 13, die zur Festlegung des Spannfutters 2 in der Richtung der X- und/oder Y-Achse dienen, dargestellt. Hier sind weitere Lichtleitfaser 9, Referenzlichtleitfaser 10 und Bohrungen 11 für das Spülmedium, sowohl in der Richtung der X- oder Y-Achse als auch in der Richtung der Z-Achse dargestellt. Die Funktion der Einrichtungen 4 zur Distanzmessung ist identisch mit den unter Figur 1 und 2 beschriebenen Einrichtungen 4. Wenn auf beiden gegenüber einander liegenden Anlageflächen 13 zusammen wirkende optische Interferometer 8 angeordnet sind, kann die Ausdehnung des Spannfutters 2, beispielsweise als Folge des Temperaturanstiegs während der Bearbeitung gemessen und kompensiert werden. In Figur 3 ist auch ein zungenförmig ausgebildeter elastischer Bereich 14 des Werkzeug- oder Werkstückhalters 3 dargestellt.

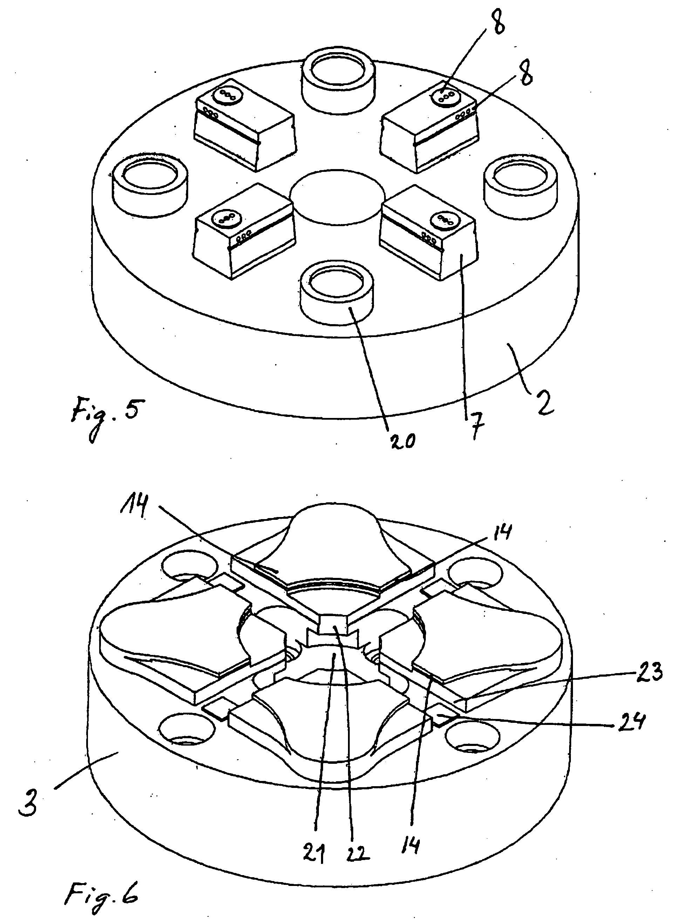

In Figur 5 ist die Spannvorrichtung 1 gesehen auf das Spannfutter 2 dargestellt. In Figur 6 ist der dazu passende Werkzeug- oder Werkstückhalter 3 dargestellt. In Figur 5 ist ersichtlich wie das Spannfutter 2 bis zu acht optische Interferometer 8 für die Messungen in der Richtung der X- und Y- Achsen und vier weitere optische Interferometer 8 für die Messung in der Richtung der Z-Achse aufweist. Der Werkstückhalter 3 weist acht zungenförmig ausgebildete elastische Bereiche 14 auf, die zusammenwirken mit konisch ausgebildeten Bereichen 15 am Spannfutter 2. Hiermit wird erreicht, dass das Werkstück oder das Werkzeug unter Kraftschluss eingespannt werden kann. Eine Bewegung in der Richtung der Z-Achse wird ebenfalls von optischen Interferometern 8 überwacht und korrigiert. Das zentrale Loch 21, das zur Aufnahme des Werkzeuges vorgesehen ist, ist mit Vorsprüngen 22 ausgebildet, so dass das Werkzeug, das hier nicht abgebildet ist, in der Art einer Bajonettkupplung festgehalten werden kann. In Figur 6 sind auch die speziell geschliffene Reflektionsflächen 23,24 ersichtlich, die mit den optischen Interferometern 8 des Spannfutters 2 zusammenwirken.

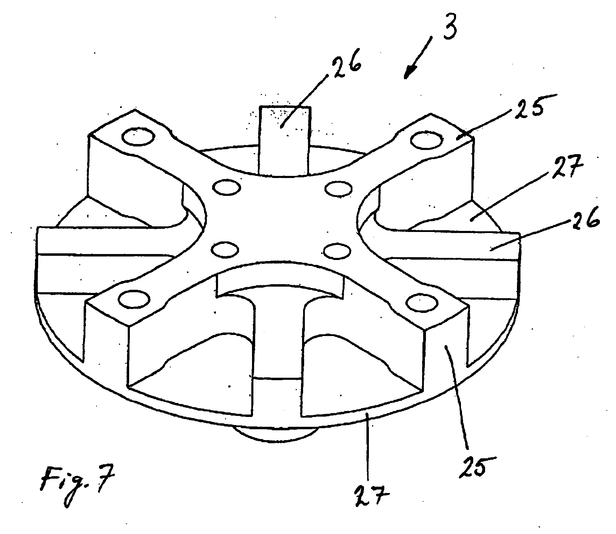

In Figur 7 ist der Werkstück oder Werkzeughalter 3 nochmals, von der gegenüberliegenden Seite perspektivisch dargestellt. Der Werkzeughalter 3 weist zwei Hauptbalken 25 die in der Richtung der X- und Y- Achsen auf der Unterseite des Werkzeughalters ausgebildet sind, sowie zwei weitere Verstärkungsbalken 26, die unter einem Winkel von 45° zwischen den Hauptbalken 25 angeordnet sind. Der flächige Bereich 27 zwischen den Balken 25,26 ist relativ dünn ausgeführt. Die Hauptbalken 25 sind im Vergleich zu den Verstärkungsbalken 26 relativ dick ausgeführt. Hierdurch wird erreicht, dass der Werkzeughalter 3 in der Z-Richtung eine höhere Elastizität als in den übrigen Richtungen hat.

Mit der hier beschriebenen Spannvorrichtung 1 wird die Position im X-Y-Z-Koordinatensystem nach dem Einspannen mit einer Genauigkeit im Nanometerbereich gemessen und fortlaufend fest gehalten. Die Information der genauen Position wird beispielsweise verwendet für die Berechnung der Kräfte, die auf dem Werkstück oder dem Werkzeug während der Bearbeitung einwirken. Auch kann die Information verwendet werden zur Kompensation von bei der Bearbeitung auftretenden Vibrationen und/oder zur Beobachtung der Abnutzung des Werkzeuges. Durch die Messung der Position in der Richtung der X-, der Y- und der Z-Achse können alle Freiheitsgrade der Bewegung des Werkstückes oder des Werkzeuges gemessen und gesteuert werden. Somit können auch Werkstücke mit einer komplizierten geometrischen Form, wie beispielsweise optische Linsen, oder die Spritzgussformen dazu, mit speziell geformten Oberflächen, in der gewünschten Genauigkeit hergestellt werden.

Die Messung findet während der Bearbeitung statt. Externe Messvorrichtungen, die Platz beanspruchen, und die bei beweglichen Spannvorrichtungen nicht verwendet werden können, werden nicht benötigt. Ein Aus- und wieder Einbauen mit einer zwischenzeitlichen zeitraubenden Kontrolle der Werkstücke fällt weg. Die optischen Interferometer 8 sind besonders geeignet für die Messung von Distanzen im Submikronbereich. Weil die Kontrolle des Werkstückes oder des Werkzeuges laufend an den Bedingungen des Bearbeitungsprozesses angepasst wird, kann die Bearbeitung auch über längere Zeit, beispielsweise über Nacht, mit hoher Präzision durchgeführt werden. Die Auswirkungen von Vibration und Temperaturausdehnung des Werkzeuges auf der Oberflächenqualität des Werkstückes werden nicht mehr am Werkzeug, sondern am eingespannten Werkstück selber korrigiert. Die zungenförmige elastische Bereiche 14 am Werkstück- oder Werkzeughalter 3 werden ebenfalls von optischen Interferometern 8 berührungslos überwacht. Hiermit werden Bewegungen des Werkstückes in der Richtung der Z-Achse gemessen und bei der Bearbeitung berücksichtigt.

Die Spannvorrichtung 1 mit den optischen Interferometern 8 wird bei Beginn der Bearbeitung zuerst mechanisch eingespannt. Der Werkzeughalter 3 und das Spannfutter 2 befinden sich auf einer Distanz von wenigen Mikrometern zum Nullpunkt des X-Y-Z-Koordinatensystems. Anschliessend werden alle optische Interferometer 8 mit Hilfe der Interferenzlichtleitfasern 10 und den speziell geschliffenen Flächen 23,24 mit einer definierten Wellenlänge und Intensität geeicht. Daraufhin wird die absolute Distanz zwischen Spannfutter 2 und Werkzeughalter 3 im Nanometerbereich gemessen. Hierzu wird Laserlicht mit beispielsweise vier verschiedenen Wellenlängen durch jeden der zwölf Lichtleitfasern 9 gesendet und empfangen. Die empfangenen reflektierten Lichtsignale werden im elektronischen Auswertesystem eingeführt, umgewandelt und die absolute Distanz in der Richtung der X-, Y- und Z-Achsen wird berechnet.

Die Differenz zwischen dem Referenzkoordinatensystem, das mit der mechanischen Einspannung festgelegt wurde, und dem vom optischen Interferometersystem gemessenen Abweichungen werden im Steuerungssystem der Bearbeitungsmaschine festgehalten. Es werden sowohl die Differenzen, die durch Verschiebungen entstanden sind, als auch die Differenzen die durch Verdrehungen entstanden sind, gemessen und gespeichert. Während der anschliessenden Bearbeitung des Werkstückes ist lediglich eine Kontrollmessung mit einer Wellenlänge erforderlich. Wenn die Spannvorrichtung 2 mit piezoaktiven Elementen 12 ausgerüstet ist, können kleine Distanzänderungen, die durch Krafteinwirkungen, Drehmomenteinwirkungen, Vibrationen oder Temperaturänderungen entstehen, korrigiert werden. Eine optimale geometrische Formgenauigkeit im Nanometerbereich kann erreicht werden.

## Patentansprüche

1. Spannvorrichtung (1) für ein Werkzeug oder ein Werkstück, umfassend ein Spannfutter (2) und einen zum Spannfutter (2) passenden Werkzeug- oder Werkstückhalter (3), wobei das Spannfutter (2) Pfosteh (7) mit Anlageflächen (13) zur Ausrichtung des Werkzeuges oder Werkstückes in einer X- und Y-Richtung und mit Stirnflächen (6) zur Festlegung einer Ebene senkrecht zur Z-Richtung aufweist, **dadurch gekennzeichnet, dass** in den Anlageflächen (13) und in den Stirnflächen (6) Einrichtungen (4) zur Messung der Distanz zwischen dem Spannfutter (2) und dem Werkzeug- oder dem Werkstückhalter (3) ausgebildet sind.

2. Spannvorrichtung (1) nach dem Anspruch 1, **dadurch gekennzeichnet, dass** die Einrichtungen (4) zur Messung der Distanz als optische Inteferometer (8) ausgebildet sind.

3. Spannvorrichtung nach Anspruch 2 **dadurch gekennzeichnet, dass** die optische Interferometer (8) mit einem elektronischen Auswertesystem gekoppelt sind.

4. Spannvorrichtung nach einem der Ansprüche 2 bis 3, **dadurch gekennzeichnet, dass** die optische Interferometer (8) auf einander gegenüberliegenden Anlageflächen (13) des Pfostens (7) des Spannfutters (2) angeordnet sind.

5. Spannvorrichtung nach einem der Ansprüche 2 bis 4, **dadurch gekennzeichnet, dass** benachbart zum optischen Interferometer (8) mit einer Lichtleitfaser (9) eine weitere Lichtleitfaser (10) als Referenz angeordnet ist.

6. Spannvorrichtung nach Anspruch 5 der **dadurch gekennzeichnet, dass** zwischen der Referenzlichtleitfaser (10) und dem optischen Interferometer (8) eine Bohrung (11) für ein Spülmedium ausgebildet ist.

7. Spannvorrichtung nach einem der Ansprüche 2 bis 6, **dadurch gekennzeichnet, dass** benachbart zum optischen Interferometer (8) eine piezoaktive Einrichtung (12) angeordnet ist.

8. Spannvorrichtung nach einem der Ansprüche 1 bis 7, **dadurch gekennzeichnet, dass** der Werkzeughalter (3) zungenförmige elastische Bereiche (14) zur Ausrichtung gegenüber dazu passend ausgebildeten Bereiche (15) des Spannfutters (2) aufweist.

9. Verfahren zur maschinellen Bearbeitung von Werkstücken mit einer Spannvorrichtung (1) nach einem der Ansprüche 1 bis 8, nacheinander umfassend folgende Schritte:
- mechanisches Einspannen des Werkzeug- oder Werstückhalters (3) in dem Spannfutter (2),
- Kalibrieren der optischen Interferometer (8) mit Hilfe der Referenzlichtleitfaser (10) am Spannfutter (2) und der speziell geschliffenen Reflektionsflächen (23,24) am Werkstück- oder Werkzeughalter (3),
- Messen der absoluten Distanz zwischen dem Spannfutter (2) und dem Werkstück- oder Werkzeughalter (3),
- Berechnen der Verschiebungen und Verdrehungen im X-Y-Z-Koordinatensystem vor der Bearbeitung,
- Berechnen der Verschiebungen und Verdrehungen im X-Y-Z-Koordinatensystem während der Bearbeitung,
- Berechnen und Ausgleichen der Verschiebungen und Verdrehungen im X-Y-Z-Koordinatensystem mit Hilfe von piezoaktiven Elementen (12).

## Claims

1. Chucking fixture (1) for a tool or a workpiece, comprising a chuck (2) and a toolholder or workholder (3) matching the chuck (2), the chuck (2) having posts (7) having bearing surfaces (13) for orienting the tool or workpiece in an X and Y direction and having end faces (6) for establishing a plane perpendicular to the Z direction, **characterized in that** devices (4) for measuring the distance between the chuck (2) and the toolholder or workholder (3) are formed in the bearing surfaces (13) and in the end faces (6).

2. Chucking fixture (1) according to Claim 1, **characterized in that** the devices (4) for measuring the distance are formed as optical interferometers (8).

3. Chucking fixture according to Claim 2, **characterized in that** the optical interferometers (8) are coupled to an electronic evaluation system.

4. Chucking fixture according to one of Claims 2 to 3, **characterized in that** the optical interferometers (8) are arranged on mutually opposing bearing surfaces (13) of the post (7) of the chuck (2).

5. Chucking fixture according to one of Claims 2 to 4, **characterized in that** there is arranged adjacent to the optical interferometer (8) having an optical fiber (9) a further optical fiber (10) as a reference.

6. Chucking fixture according to Claim 5, **characterized in that** a bore (11) for a rinsing medium is formed between the reference optical fiber (10) and the optical interferometer (8).

7. Chucking fixture according to one of Claims 2 to 6, **characterized in that** a piezoactive device (12) is arranged adjacent to the optical interferometer (8).

8. Chucking fixture according to one of Claims 1 to 7, **characterized in that** the toolholder (3) has tongue-shaped resilient regions (14) for orienting relative to matchingly formed regions (15) of the chuck (2).

9. Method for machining workpieces using a chucking fixture (1) according to one of Claims 1 to 8, subsequently including the following steps:
- mechanically clamping the toolholder or workholder (3) in the chuck (2),
- calibrating the optical interferometers (8) with the aid of the reference optical fiber (10) on the chuck (2) and the specially ground reflection surfaces (23, 24) on the toolholder or workholder (3),
- measuring the absolute distance between the chuck (2) and the toolholder or workholder (3),
- calculating the displacements and torsions in the X-Y-Z coordinate system prior to machining,
- calculating the displacements and torsions in the X-Y-Z coordinate system during machining,
- calculating and compensating for the displacements and torsions in the X-Y-Z coordinate system with the aid of piezoactive elements (12).

## Revendications

1. Appareil de serrage (1) pour un outil ou une pièce, comprenant un mandrin de serrage (2) et un support d'outil ou de pièce (3) adapté au mandrin de serrage (2), le mandrin de serrage (2) présentant des montants (7) avec des surfaces d'appui (13) pour orienter l'outil ou la pièce dans une direction X ou Y et avec des surfaces frontales (6) pour fixer un plan perpendiculairement à la direction Z, **caractérisé en ce que** des dispositifs (4) de mesure de la distance entre le mandrin de serrage (2) et le support d'outil ou de pièce (3) sont réalisés dans les surfaces d'appui (13) et dans les surfaces frontales (6).

2. Appareil de serrage (1) selon la revendication 1, **caractérisé en ce que** les dispositifs (4) de mesure de la distance sont réalisés sous forme d'interféromètres optiques (8).

3. Appareil de serrage selon la revendication 2, **caractérisé en ce que** les interféromètres optiques (8) sont accouplés à un système d'analyse électronique.

4. Appareil de serrage selon l'une quelconque des revendications 2 à 3, **caractérisé en ce que** les interféromètres optiques (8) sont disposés sur des surfaces d'appui opposées (13) du montant (7) du mandrin de serrage (2).

5. Appareil de serrage selon l'une quelconque des revendications 2 à 4, **caractérisé en ce qu'**à côté de l'interféromètre optique (8) comprenant une fibre optique (9) est disposée un autre fibre optique (10) servant de référence.

6. Appareil de serrage selon la revendication 5, **caractérisé en ce qu'**un alésage (11) pour un fluide de rinçage est réalisé entre la fibre optique de référence (10) et l'interféromètre optique (8).

7. Appareil de serrage selon l'une quelconque des revendications 2 à 6, **caractérisé en ce qu'**un dispositif piézoactif (12) est disposé à côté de l'interféromètre optique (8).

8. Appareil de serrage selon l'une quelconque des revendications 1 à 7, **caractérisé en ce que** le support d'outil (3) présente des régions élastiques en forme de langues (14) pour l'orientation de régions (15) du mandrin de serrage (2) réalisées de manière à s'adapter à celles-ci.

9. Procédé pour l'usinage en machine de pièces avec un appareil de serrage (1) selon l'une quelconque des revendications 1 à 8, comprenant, en succession, les étapes suivantes :
- serrage mécanique du support d'outil ou de pièce (3) dans le mandrin de serrage (2),
- calibrage de l'interféromètre optique (8) à l'aide de la fibre optique de référence (10) sur le mandrin de serrage (2) et des surfaces de réflexion (23, 24) meulées spécialement sur le support de pièce ou d'outil (3),
- mesure de la distance absolue entre le mandrin de serrage (2) et le support de pièce ou d'outil (3),
- calcul des déplacements et rotations dans le système de coordonnées XYZ avant l'usinage,
- calcul des déplacements et rotations dans le système de coordonnées XYZ pendant l'usinage, et
- calcul et compensation des déplacements et rotations dans le système de coordonnées XYZ à l'aide d'éléments piézoactifs (12).
